# EUROPÄISCHE PATENTSCHRIFT

(11) **EP 2 914 446 B1**
(45) Veröffentlichungstag und Bekanntmachung des Hinweises auf die Patenterteilung: **09.11.2016**
(21) Anmeldenummer: 13756148.6
(22) Anmeldetag: 02.09.2013
(51) Int. Cl.: B60C 11/12

(54) **LAUFSTREIFENPROFIL EINES FAHRZEUGREIFENS**
TREAD PROFILE OF A VEHICLE TIRE
PROFIL DE BANDE DE ROULEMENT D'UN PNEUMATIQUE DE VÉHICULE

(30) Priorität: 05.11.2012 DE 102012110567
(43) Veröffentlichungstag der Anmeldung: 09.09.2015
(73) Patentinhaber: Continental Reifen Deutschland GmbH, 30165 Hannover (DE)
(72) Erfinder: LEHMANN, Jörg, 30453 Hannover (DE)
(74) Vertreter: Finger, Karsten
(86) Internationale Anmeldenummer: PCT/EP2013/068042
(87) Internationale Veröffentlichungsnummer: WO 2014/067693

(56) Entgegenhaltungen:
- EP-A1- 1 541 380
- EP-A1- 1 552 966
- EP-A2- 0 829 381
- WO-A1-96/01190
- WO-A1-2011/120817
- WO-A1-2012/043036
- JP-A- 2006 232 218

## Beschreibung

Die Erfindung betrifft ein Laufstreifenprofil eines Fahrzeugreifens, welches ein über den Umfang des Laufstreifens umlaufendes Profilband mit Feineinschnitten aufweist, wobei der Feineinschnitt aus wenigstens drei in etwa axial verlaufenden Abschnitten besteht, welche in Aufsicht als Geraden ausgebildet sind, wobei der erste und der dritte Abschnitt die beiden äußeren Abschnitte des Feineinschnittes bilden und - in Aufsicht auf das Laufstreifenprofil - auf einer gemeinsamen, gedachten Geraden angeordnet sind und der erste und der dritte Abschnitt einen Tiefenverlauf aufweisen, welcher unter einem Winkel α gleichsinnig von der radialen Richtung abweicht und wobei der zweite Abschnitt in seinem Tiefenverlauf unter einem Winkel β von der radialen Richtung gegensinnig zu dem ersten und dritten Abschnitt abweicht.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Ein Laufstreifenprofil gemäß dem Oberbegriff ist aus der EP 1 552 966 B1 bekannt geworden. Ein Feineinschnitt dieses Laufstreifenprofils besteht aus drei Abschnitten, welche im Neuzustand des Reifens auf einer gemeinsamen Geraden angeordnet sind. Die beiden äußeren Abschnitte (der erste und der dritte Abschnitt) weisen einen gleichen und gleichsinnigen, von der radialen Richtung abweichenden Tiefenverlauf auf. Der mittlere Abschnitt (der zweite Abschnitt) weist einen gegensinnigen Tiefenverlauf in Bezug auf die beiden äußeren Abschnitte auf. Der Tiefenverlauf aller drei Abschnitte ist derart aufeinander abgestimmt, dass in Umfangsrichtung eine Steifigkeitsbalance erreicht ist. Der Feineinschnitt weist - im Querschnitt des Feineinschnittes betrachtet - einen aus Geraden gebildeten Tiefenverlauf auf.

Im Neuzustand des Reifens und somit des Laufstreifenprofils sind die durch Feineinschnitte gegliederten Profilelemente vergleichsweise hoch und dadurch weich. Je angefahrener, also geringer hoch, die Profilelemente sind, desto steifer werden diese. Im Neuzustand des Laufstreifenprofils ist es daher von Vorteil, wenn sich die Profilelemente ausreichend durch Abstützungseffekte gegenüberliegender Feineinschnittwände verschränken können, wodurch das Profilelement steifer wird.

Es ist die Aufgabe der Erfindung, ein Laufstreifenprofil eines Fahrzeugreifens zur Verfügung zu stellen, das im Neuzustand als auch über seine Lebensdauer ein gutes Handling aufweist und das verbesserte Brems- und Antriebseigenschaften aufweist.

Gelöst wird die Aufgabe, indem der zweite Abschnitt - in Aufsicht auf das Laufstreifenprofil und im Neuzustand - in Umfangsrichtung versetzt angeordnet ist und indem die Größe der Flächen des ersten und dritten Abschnittes in Summe ungleich der Größe der Fläche des zweiten Abschnittes ist.

Es ist erfindungsgemäß ein Laufstreifenprofil geschaffen, dass im Neuzustand neben der Abstützeffekte gegenüberliegender Feineinschnittwände in Umfangsrichtung zusätzlich durch den Versatz des zweiten Abschnittes auch bei Querkräften Abstützeffekte zeigt, welche sowohl bei Umfangskräften als auch bei Querkräften zu einer vorteilhaften Versteifung des Profilelementes führt. Die beiden Enden des zweiten Abschnittes sind mit den inneren Enden des ersten und des dritten Abschnittes verbunden, wodurch zwei in etwa in Umfangsrichtung ausgerichtete Feineinschnittabschnitte entstanden sind, deren gegenüberliegenden Feineinschnittwände sich bei auftretenden Querkräften gegenseitig abstützen.

Im Tiefenverlauf weist der Feineinschnitt eine vom Neuzustand abweichende Geometrie auf. Der erste und der dritte Abschnitt weist einen Tiefenverlauf auf, welcher gleichsinnig unter dem gleichen Winkel in eine Umfangsrichtung geneigt ist, wodurch zwei Flächen gebildet sind, die über ihren Tiefenverlauf in eine Umfangsrichtung geneigt sind. Der zweite Abschnitt verläuft als geneigte Fläche von der radialen Richtung abweichend in die entgegengesetzte Umfangsrichtung. Dadurch, dass die Größe der Flächen des ersten und dritten Abschnittes in Summe ungleich der Größe der Fläche des zweiten Abschnittes ist, erzielt man unterschiedliche Blocksteifigkeiten in Umfangsrichtung und entgegen der Umfangsrichtung. Dieses ist vorteilhaft, um das Laufstreifenprofil optimal für das Bremsen bzw. Rollen (eine Umfangsrichtung) und den Antrieb (entgegengesetzte Umfangsrichtung) einzustellen, die für ihre optimale Wirkung unterschiedliche Steifigkeiten benötigen. Alle Abschnitte enden vorzugsweise - unabhängig von ihrem Verlauf - in der gleichen radialen Tiefe.

Es ist ein Laufstreifenprofil mit einem sogenannten "3D-Feineinschnitt" geschaffen, das im Neuzustand als auch über seine Lebensdauer ein gutes Handling aufweist und das verbesserte Brems- und Antriebseigenschaften aufweist.

"Axiale Richtung" meint die Richtung entlang der Reifenachse.
"Umfangsrichtung" meint die Richtung entlang des Reifen- bzw. Laufstreifenabrollens. "Radiale Richtung" meint die Richtung vom Reifenmittelpunkt zum Laufstreifen.
"Breite des Feineinschnittes" meint die minimale Ausdehnung eines Feineinschnittes in Umfangsrichtung.

Zweckmäßig ist es, wenn der Versatz des zweiten Abschnittes in Umfangsrichtung - in Aufsicht und im Neuzustand des Laufstreifenprofils - zwischen 2 mm und 10 mm beträgt, gemessen senkrecht auf die gedachte Gerade, auf welcher der erste und der dritte Abschnitt liegen. Es ergibt sich bei großer Profiltiefe (Neureifen) eine mechanische Abstützung die sich mit der im Reifenleben ergebenden Abnutzung reduziert. Der prinzipielle Nachteil der geringeren Steifigkeit bei der hohen Profiltiefe des Neureifens wird damit entgegen gewirkt.

Vorteilhaft ist es, wenn der erste und dritte Abschnitt sowie der zweite Abschnitt einen Winkel α und einen Winkel β zwischen 5° und 25° mit der radialen Richtung einschließen, wobei der Winkel α gleich oder ungleich dem Winkel β ist. Je nach Einsatzbereich können Winkel gewählt werden, die optimale und ggf. unterschiedliche Steifigkeiten für Bremsen bzw. Antrieb generieren.

Ein derartiges Laufstreifenprofil ist in einem Fahrzeugreifen, vorzugsweise in einem Antriebsachsreifens eines Nutzfahrzeugreifens einzusetzen.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine dreidimensionale Ansicht eines Laufstreifenprofils eines Fahrzeugreifens mit Feineinschnitten in den Profilelementen;
Fig. 2 eine dreidimensionale Ansicht eines Feineinschnittes;
Fig. 3a eine Aufsicht auf den Feineinschnitt der Fig. 2 im Neuzustand;
Fig. 3b eine Aufsicht auf den Feineinschnitt der Fig. 2 im zu etwa 50% angefahrenen Zustand;
Fig. 3c eine Aufsicht auf den Feineinschnitt der Fig. 2 im zu etwa 100% angefahrenen Zustand.

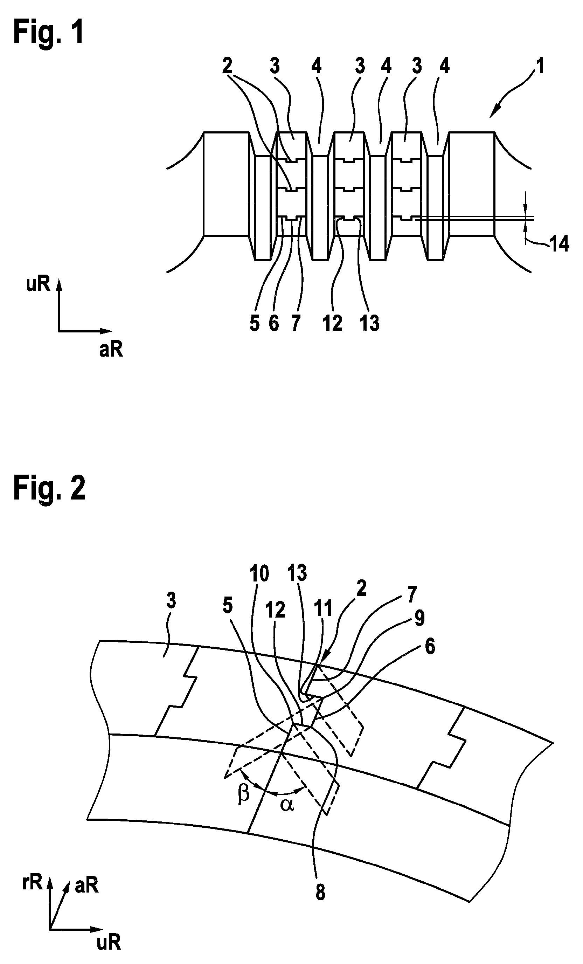

Die **Fig. 1** zeigt eine dreidimensionale Ansicht eines Laufstreifenprofils 1 eines Fahrzeugreifens mit Feineinschnitten 2 in den Profilelementen, hier Profilbänder 3. Jedes Profilband 3 ist beidseitig von Umfangsrillen 4 begrenzt. Der Feineinschnitt 2 durchquert das Profilband 3 in axialer Richtung aR vollständig. Der Feineinschnitt 2 besteht aus drei Abschnitten 5, 6, 7. Der erste Abschnitt 5 und der dritte Abschnitt 7 bilden die beiden äußeren Abschnitte des Feineinschnittes 2 und sind in etwa in axialer Richtung aR auf einer gemeinsamen gedachten Gerade angeordnet. Der zweite Abschnitt 6 bildet - in Aufsicht auf das Laufstreifenprofil - ebenfalls eine Gerade und hat im Neuzustand einen Versatz 14 von 8 mm, gemessen in Umfangsrichtung entgegen der Reifendrehrichtung gegenüber dem ersten Abschnitt 5 und dem zweiten Abschnitt 6.

Die **Fig. 2** zeigt eine dreidimensionale Ansicht eines Feineinschnittes 2 der Fig. 1. Im Tiefenverlauf schließen die ebenen Flächen des ersten Abschnittes 5 und des dritten Abschnittes 7 einen gleichen Winkel β von 10° mit der radialen Richtung rR ein, während die Fläche des zweiten Abschnittes 6 einen Wert α von 8° mit der radialen Richtung rR einschließt und gegenläufig zu den Flächen des ersten und dritten Abschnittes 5, 7 geneigt ist. Die Größe der Flächen des ersten und dritten Abschnittes 5, 7 ist in Summe ungleich der Größe der Fläche des zweiten Abschnittes 6. Die beiden Enden 8, 9 des zweiten Abschnittes 6 sind mit den inneren Enden des ersten und des dritten Abschnittes 10, 11 verbunden, wodurch zwei in etwa in Umfangsrichtung ausgerichtete Feineinschnittabschnitte 12, 13 entstanden sind. Alle drei Abschnitte 5, 6, 7 weisen die gleiche Länge auf. Alle drei Abschnitte 5, 6, 7 sind derart angeordnet, dass sie einen durchgängigen Feineinschnitt 2 ohne Durchbrechungen oder Unterbrechungen bilden.

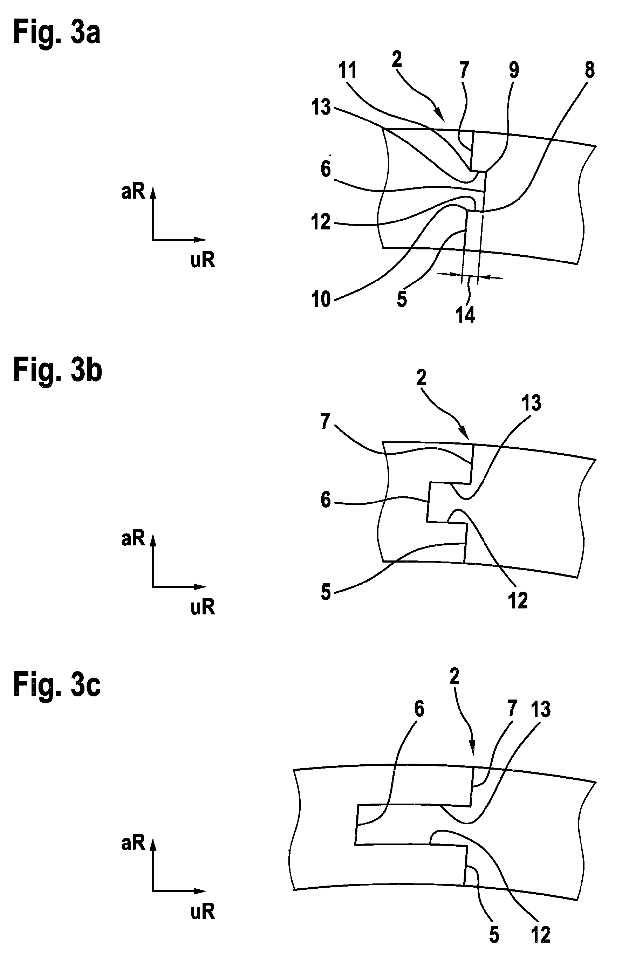

Die **Fig. 3a** zeigt eine Aufsicht auf den Feineinschnitt 2 der Fig. 2 im Neuzustand, während die **Fig. 3b** dieselbe Aufsicht bei zu etwa 50% angefahrenen Zustand und die **Fig. 3c** dieselbe Aufsicht bei zu etwa 100% angefahrenen Zustand zeigt. Es ist ersichtlich, dass die etwa in Umfangsrichtung uR ausgerichteten Feineinschnittabschnitte 12, 13 in ihrer Länge bei weiter angefahrenem Zustand zunehmen.

### Bezugszeichenliste

### (Teil der Beschreibung)

- 1: Laufstreifenprofil
- 2: Feineinschnitt
- 3: Profilband
- 4: Umfangsrille
- 5: erster Abschnitt
- 6: zweiter Abschnitt
- 7: dritter Abschnitt
- 8: Ende des zweiten Abschnittes
- 9: Ende des zweiten Abschnittes
- 10: Inneres Ende des ersten Abschnittes
- 11: Inneres Ende des dritten Abschnittes
- 12: Feineinschnittabschnitt
- 13: Feineinschnittabschnitt
- 14: Versatz

- rR: radiale Richtung
- aR: axiale Richtung
- uR: Umfangsrichtung

## Patentansprüche

1. Laufstreifenprofil (1) eines Fahrzeugreifens, welches ein über den Umfang des Laufstreifens umlaufendes Profilband (3) mit Feineinschnitten (2) aufweist, wobei der Feineinschnitt (2) aus wenigstens drei in etwa axial verlaufenden Abschnitten (5, 6, 7) besteht, welche in Aufsicht als Geraden ausgebildet sind, wobei der erste und der dritte Abschnitt (5, 7) die beiden äußeren Abschnitte des Feineinschnittes (2) bilden und - in Aufsicht auf das Laufstreifenprofil - auf einer gemeinsamen, gedachten Geraden angeordnet sind und der erste und der dritte Abschnitt (5, 7) einen Tiefenverlauf aufweisen, welcher unter einem Winkel α gleichsinnig von der radialen Richtung (rR) abweicht und wobei der zweite Abschnitt (6) in seinem Tiefenverlauf unter einem Winkel β von der radialen Richtung (rR) gegensinnig zu dem ersten und dritten Abschnitt (5, 7) abweicht,
**dadurch gekennzeichnet, dass** der zweite Abschnitt (6) - in Aufsicht und im Neuzustand des Laufstreifenprofils - in Umfangsrichtung (uR) versetzt angeordnet ist und dass die Größe der Flächen des ersten und dritten Abschnittes (5, 7) in Summe ungleich der Größe der Fläche des zweiten Abschnittes (6) ist.

2. Laufstreifenprofil nach Anspruch 1, **dadurch gekennzeichnet, dass** der Versatz (14) des zweiten Abschnittes (6) in Umfangsrichtung (uR) - in Aufsicht und im Neuzustand des Laufstreifenprofils - zwischen 2 mm und 10 mm beträgt, gemessen senkrecht auf die gedachte Gerade, auf welcher der erste und der dritte Abschnitt (5, 7) liegen.

3. Laufstreifenprofil nach Anspruch 1 oder 2, **dadurch gekennzeichnet, dass** der erste und dritte Abschnitt (5, 7) sowie der zweite Abschnitt (6) einen Winkel α und einen Winkel β zwischen 5° und 25° mit der radialen Richtung (rR) einschließen, wobei der Winkel α gleich oder ungleich dem Winkel β ist.

4. Fahrzeugluftreifen, welcher ein Laufstreifenprofil (1) gemäß eines oder mehrerer der Ansprüche 1 bis 3 aufweist, wobei dieser Fahrzeugluftreifen vorzugsweise ein Antriebsachsreifen eines Nutzfahrzeugreifens ist.

## Claims

1. Tread profile (1) of a vehicle tire, which tread profile has a profile band (3) which runs in encircling fashion over the circumference of the tread and which has sipes (2), wherein the sipe (2) is composed of at least three approximately axially running sections (5, 6, 7) which are in the form of straight lines as seen in plan view, wherein the first and third sections (5, 7) form the two outer sections of the sipe (2) and are arranged on a common imaginary straight line as seen in plan view of the tread profile, and the first and third sections (5, 7) have depth profiles which deviate codirectionally from the radial direction (rR) by an angle α, and wherein the second section (6), in its depth profile, deviates from the radial direction (rR) by an angle β in the opposite direction to the first and third sections (5, 7),
**characterized in that** the second section (6) - in plan view and in the new state of the tread profile - is arranged offset in the circumferential direction (uR), and **in that** the total size of the surfaces of the first and third sections (5, 7) is unequal to the size of the surface of the second section (6).

2. Tread profile according to Claim 1, **characterized in that** the offset (14) of the second section (6) in the circumferential direction (uR) - as seen in plan view and in the new state of the tread profile - amounts to between 2 mm and 10 mm measured perpendicular to the imaginary straight line on which the first and third sections (5, 7) are situated.

3. Tread profile according to Claim 1 or 2, **characterized in that** the first and third sections (5, 7) and the second section (6) enclose an angle α and an angle β of between 5° and 25° with the radial direction (rR), wherein the angle α is equal to or unequal to the angle β.

4. Pneumatic vehicle tire which has a tread profile (1) according to one or more of Claims 1 to 3, wherein said pneumatic vehicle tire is preferably a drive axle tire of a utility vehicle tire.

## Revendications

1. Profil de bande de roulement (1) d'un pneumatique de véhicule, qui présente une bande profilée (3) avec de fines entailles (2), qui entoure la périphérie de la bande de roulement, la fine entaille (2) se composant d'au moins trois portions s'étendant approximativement axialement (5, 6, 7), qui, en vue de dessus, sont réalisées sous forme de droites, la première et la troisième portion (5, 7) formant les deux portions extérieures de la fine entaille (2) et, en vue de dessus du profilé de bande de roulement, étant disposées sur une droite imaginaire commune et la première et la troisième portion (5, 7) présentant une allure en profondeur qui s'écarte suivant un angle α dans le même sens de la direction radiale (rR) et la deuxième portion (6), dans son allure en profondeur, s'écartant suivant un angle β de la direction radiale (rR) dans le sens opposé par rapport à la première et à la troisième portion (5, 7),
**caractérisé en ce que** la deuxième portion (6), en vue de dessus et à l'état neuf du profil de bande de roulement, est disposée de manière décalée dans la direction périphérique (uR) et **en ce que** la taille totale combinée des surfaces de la première et de la troisième portion (5, 7) est différente de la taille de la surface de la deuxième portion (6).

2. Profil de bande de roulement selon la revendication 1, **caractérisé en ce que** le décalage (14) de la deuxième portion (6) dans la direction périphérique (uR), en vue de dessus et à l'état neuf du profil de bande de roulement, est compris entre 2 mm et 10 mm, mesuré perpendiculairement à la droite imaginaire sur laquelle se trouvent la première et la deuxième portion (5, 7).

3. Profil de bande de roulement selon la revendication 1 ou 2, **caractérisé en ce que** la première et la troisième portion (5, 7) ainsi que la deuxième portion (6) forment un angle α et un angle β compris entre 5° et 25° avec la direction radiale (rR), l'angle α étant égal ou différent de l'angle β.

4. Pneumatique de véhicule, qui présente un profil de bande de roulement (1) selon une ou plusieurs des revendications 1 à 3, ce pneumatique de véhicule étant de préférence un pneu d'essieu moteur d'un pneumatique de véhicule utilitaire.
